Europäisches Patentamt

European Patent Office

Office européen des brevets

(19)

(11) Numéro de publication : **0 133 133**
**B1**

(12)
# FASCICULE DE BREVET EUROPÉEN

(45) Date de publication du fascicule du brevet :
**30.09.87**

(21) Numéro de dépôt : **84401570.1**

(22) Date de dépôt : **26.07.84**

(51) Int. Cl.⁴ : **F 22 B 37/12**, F 22 B 37/42,
G 01 M 3/02, F 17 D 5/02

(54) **Raccord de sortie vapeur pour générateur de vapeur.**

(30) Priorité : **28.07.83 FR 8312476**

(43) Date de publication de la demande :
**13.02.85 Bulletin 85/07**

(45) Mention de la délivrance du brevet :
**30.09.87 Bulletin 87/40**

(84) Etats contractants désignés :
**BE CH DE GB IT LI NL**

(56) Documents cités :
**FR-A- 2 449 260**
**US-A- 2 526 172**

(73) Titulaire : **NOVATOME**
**La Boursidière R.N. 186**
**F-92357 Le Plessis Robinson (FR)**

**COMMISSARIAT A L'ENERGIE ATOMIQUE Etablissement de Caractère Scientifique Technique et Industriel**
**31/33, rue de la Fédération**
**F-75015 Paris (FR)**

(72) Inventeur : **Zuber, Thierry**
**120 rue de Javel**
**F-75015 Paris (FR)**
Inventeur : **Traiteur, René**
**19 rue des Capucines**
**F-91130 Ris-Orangis (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

L'invention concerne un raccord de sortie vapeur plus particulièrement destiné à être utilisé à la sortie d'un tube du faisceau tubulaire d'un générateur de vapeur.

Les générateurs de vapeur sont généralement constitués d'une enceinte allongée renfermant un faisceau tubulaire. Un fluide caloporteur circule dans l'enceinte et cède sa chaleur à de l'eau circulant dans le faisceau tubulaire afin de la transformer en vapeur. Les tubes du faisceau tubulaire sortent généralement du générateur de vapeur par leurs deux extrémités ; par une de leurs extrémités on introduit l'eau sous pression, et la vapeur surchauffée sort par l'autre extrémité. Des collecteurs recueillent la vapeur en provenance des tubes du faisceau.

L'invention concerne tout particulièrement le raccordement des sorties vapeur des tubes du faisceau tubulaire avec les collecteurs de vapeur.

Il a déjà été proposé diverses dispositions de raccordement de ces tubes aux collecteurs de vapeur, mais ces dispositions ne permettent généralement pas une intervention facile lorsqu'il faut effectuer des essais d'étanchéité de ces tubes.

Ainsi on connaît déjà, par exemple par la demande de brevet français publiée sous le n° 2.449.260, des raccords de forme générale en T reliant les tubes de sortie vapeur d'un générateur avec les collecteurs ; ils sont constitués d'une part d'un tronçon de tube droit dont une extrémité est raccordée à l'extrémité du tube de sortie vapeur, et dont l'autre extrémité est obturée à l'aide d'un bouchon amovible, et d'autre part d'une dérivation latérale branchée sur la partie centrale du tronçon droit et raccordée aux collecteurs de vapeur. Lorsque l'on veut introduire un gaz traceur à l'intérieur d'un tube du faisceau tubulaire, par exemple pour vérifier son étanchéité, on enlève le bouchon obturant l'extrémité de la partie droite du raccord correspondant, et on branche à sa place une canalisation amenant le gaz traceur dans le raccord, et par là dans le tube correspondant. Avec un tel dispositif tous les raccords doivent obligatoirement être munis d'un tel bouchon amovible, ce qui conduit à un très grand nombre de bouchons, autant que de raccords, car on ne peut pas prévoir à l'avance sur quel tube il faudra intervenir. Une intervention sur un raccord pour introduire un gaz traceur est cependant une opération exceptionnelle effectuée très rarement et sur un nombre très limité de raccords, si bien que le générateur de vapeur est alors muni d'un grand nombre de bouchons amovibles dont la plus grande partie resteront vraisemblablement en place pendant toute la durée de vie de l'installation. Ce grand nombre de bouchons amovibles augmente le prix de revient de l'installation et en diminue la fiabilité d'étanchéité sans améliorer vraiment la commodité d'intervention en vue de la détection d'une fuite.

La présente invention permet de pallier ces divers inconvénients.

L'invention concerne donc un raccord de sortie vapeur destiné à être disposé entre la sortie d'un tube du faisceau tubulaire d'un générateur de vapeur et la conduite de raccordement de ce tube à un collecteur de vapeur, ce raccord étant du type comportant une partie tubulaire droite raccordée par soudure à l'une de ses extrémités à la sortie du tube du faisceau, et obturée à son autre extrémité, et une partie tubulaire branchée en dérivation latérale sur la partie droite et raccordée par soudure à son autre extrémité à la conduite de raccordement vers le collecteur. Selon l'invention l'extrémité obturée de la partie droite comporte un fond localement d'épaisseur réduite, pour permettre sa perforation, en vue d'injecter un gaz dans le tube par l'orifice ainsi réalisé.

Selon une forme préférentielle de réalisation de l'invention, l'extrémité obturée comporte des nervures radiales extérieures destinées à constituer des points de fixation et de réaction pour un appareil de perforation du fond.

L'invention sera mieux comprise en se référant à un mode de réalisation particulier donné à titre d'exemple et représenté par les dessins annexés.

La figure 1 est une vue schématique partielle en coupe d'un générateur de vapeur muni de raccords selon l'invention.

La figure 2 est une coupe longitudinale d'un raccord selon II-II de la figure 3.

La figure 3 est une vue en bout selon III de la figure 2.

La figure 4 représente, monté à l'extrémité d'un raccord, un appareil permettant la perforation du fond du raccord et l'alimentation en gaz sous pression.

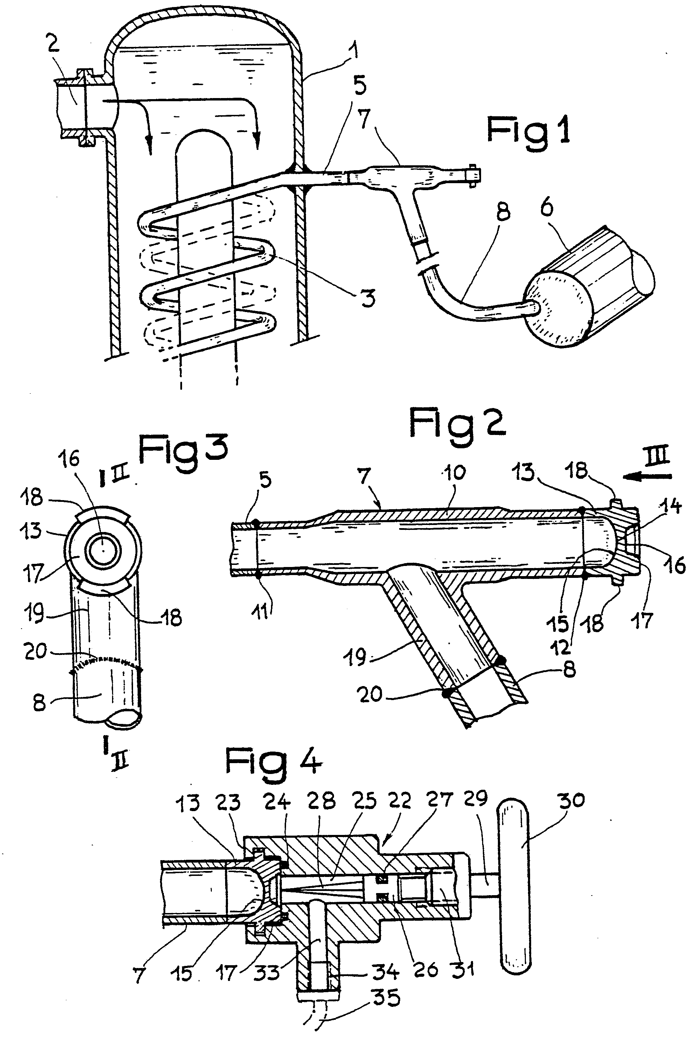

On se référera tout d'abord à la figure 1 qui rappelle la structure générale d'un générateur de vapeur comportant une enveloppe cylindrique 1 dans laquelle un fluide caloporteur introduit par la conduite d'entrée 2 circule de haut en bas. Le fluide caloporteur peut être par exemple du sodium liquide dans le cas d'une chaudière nucléaire à refroidissement au sodium. Le générateur comporte aussi un faisceau tubulaire constitué par un grand nombre de tubes 3 enroulés en hélice dans l'enceinte 1 ; pour garder au dessin son caractère schématique on n'a représenté ici qu'un seul des nombreux tubes 3 constituant le faisceau. De l'eau sous pression est introduite à l'extrémité inférieure (non représentée sur le dessin) de chaque tube 3. Au cours de son mouvement vers le haut l'eau est progressivement vaporisée par absorption de la chaleur du sodium liquide qui baigne les parois extérieures du tube. A son extrémité supérieure 5 le tube 3 qui traverse la paroi 1 de l'enceinte contient donc de la vapeur d'eau qui sera recueillie dans un collecteur 6 destiné à recevoir la vapeur en provenance d'un grand nombre de tubes tels que 3. Un raccord de sortie 7, de forme générale en T, fait la liaison entre l'extrémité de sortie 5 du tube 3 et une tubulure 8 de raccordement avec le collecteur 6.

Le raccord 7 est décrit plus en détail sur les figures 2 et 3 où l'on verra qu'il comporte une partie droite 10 directement soudée bout à bout en 11 sur l'extrémité 5 du tube du faisceau tubulaire. L'autre extrémité de la partie 10 est soudée bout à bout en 12 à une pièce 13 formant bouchon. La pièce 13 est fermée par un fond 14 délimité par une paroi interne concave 15 de forme sensiblement plane, au moins dans sa partie centrale. Autour de la partie centrale 16 l'extrémité de la pièce 13 forme une portée annulaire plane 17. La pièce 13 comporte également des nervures radiales 18 en saillie sur une partie de la surface cylindrique externe. Le fond 14 de la pièce 13 présente ainsi une bonne résistance mécanique à la pression régnant en service dans le tube 3 et le raccord 7 grâce à la forme sphérique de la paroi 15. Néanmoins, la partie centrale de ce fond 14 est de faible épaisseur.

Le raccord 7 comporte aussi une branche dérivée 19 qui débouche dans la partie centrale de la partie droite 10 et qui est soudée bout à bout en 20 par son autre extrémité à la tubulure de raccordement 8.

Lorsque, pendant un arrêt du générateur de vapeur, on veut introduire un gaz traceur dans un tube 3 alors vide de vapeur pour vérifier son étanchéité, on utilise un appareil 22 tel que celui représenté en coupe à la figure 4. L'appareil 22 comporte à son extrémité un système de crampons 23 et de gorges conjuguées avec les nervures 18 de la pièce 13 permettant, par un montage du type baïonnette, de bloquer avec serrage l'appareil 22 contre la face externe de la pièce 13, un joint torique 24 venant alors assurer une étanchéité par appui sur la portée annulaire 17.

La pièce 22 comporte un alésage central 25 ouvert vers la pièce 13 et dans lequel peut se déplacer longitudinalement un piston 26 muni d'un joint d'étanchéité 27. Le piston 26 qui porte une pointe effilée 28 est solidaire d'une tige 29 et d'une roue de commande 30. Une partie de la tige 29 forme une vis 31 engagée dans une partie filetée conjuguée dans le corps de l'appareil 22. Un conduit latéral 33 débouche dans l'alésage 25 et comporte une partie filetée 34 permettant d'y raccorder une tuyauterie extérieure 33 simplement représentée en traits mixtes sur le dessin.

L'appareil 22 étant en place sur l'extrémité de la pièce 13 tel que représenté à la figure 4, et la tuyauterie 35 étant raccordée au réservoir de gaz traceur à introduire dans le raccord 7, on voit que le gaz est retenu par le fond 14 et les joints d'étanchéité 24 et 27. Pour introduire le gaz dans le raccord 7, et par là dans le tube 3, il suffit de manœuvrer la roue 30 dans le sens faisant progresser la vis 31 vers la gauche ; la pointe 28 viendra alors perforer le fond 14 dans la partie de plus faible épaisseur si bien que, après un léger retrait de la pointe si nécessaire, le gaz s'écoulera de la tuyauterie 35 vers l'intérieur du raccord 7 par l'orifice formé et dégagé.

Lorsque l'essai nécessitant l'introduction de gaz est terminé, il suffit d'enlever l'appareil 22, puis de tronçonner l'extrémité de la partie droite 10 du raccord 7 pour éliminer la pièce 13 perforée. On soudera alors à l'extrémité tronçonnée une nouvelle pièce 13 qui assurera à nouveau l'obturation lorsque le générateur sera remis en service.

On comprendra facilement que la disposition ainsi décrite présente une grande fiabilité d'étanchéité en service normal tout en restant de réalisation économique. Elle permet aussi une grande facilité de mise en place des moyens d'introduction de gaz lorsqu'il s'avère nécessaire de vérifier le tube concerné dans le faisceau.

Bien entendu l'invention n'est pas strictement limitée au mode de réalisation qui a été décrit à titre d'exemple. Ainsi, sans doute au prix d'une réalisation plus délicate, la pièce d'obturation 13 pourrait aussi ne former qu'une seule pièce avec le raccord proprement dit 10. Dans ce cas après une perforation du fond 14 pour introduire du gaz, on procèderait comme décrit plus haut en tronçonnant l'extrémité du raccord et en remplaçant l'extrémité enlevée par une pièce 13 qui serait alors soudée au raccord.

## Revendications

1. Raccord de sortie vapeur destiné à être disposé entre la sortie (5) d'un tube (3) du faisceau tubulaire d'un générateur de vapeur et la conduite (8) de raccordement de ce tube à un collecteur de vapeur, raccord du type comportant une partie tubulaire droite (10) raccordée par soudure à l'une de ses extrémités à la sortie du tube du faisceau et obturée à son autre extrémité, et une partie tubulaire (19) branchée en dérivation latérale sur la partie droite et raccordée par soudure à son autre extrémité à la conduite (8) de raccordement vers le collecteur, caractérisé par le fait que l'extrémité obturée de la partie droite (10) comporte un fond (14), localement d'épaisseur réduite, pour permettre sa perforation, en vue d'injecter un gaz dans le tube par l'orifice ainsi réalisé.

2. Raccord selon revendication 1, caractérisé par le fait que l'extrémité obturée comporte des nervures radiales extérieures (18) destinées à constituer des points de fixation et de réaction pour un appareil (22) de perforation du fond.

3. Raccord selon revendication 2, caractérisé par le fait que la partie externe du fond de la partie droite comporte une portée annulaire (17) entourant la partie de faible épaisseur et destinée à servir d'appui à un joint d'étanchéité.

4. Raccord selon l'une quelconque des revendications précédentes, caractérisé par le fait que le fond (14) de la partie droite présente vers l'intérieur une surface concave (15) pratiquement sphérique et vers l'extérieur une partie centrale (16) pratiquement plane.

## Claims

1. Steam outlet connector intended to be arranged between the outlet (5) of a tube (3) of the tube bundle of a steam generator and the pipe (8) connecting this tube to a steam collector, this connector being of the type comprising a straight tubular part (10) joined at one of its ends by welding to the outlet of the tube of the bundle and closed off at its other end, and a tubular part (19) branching off laterally from the straight part and joined at its other end by welding to the connecting pipe (8) leading to the collector, characterized in that the closed-off end of the straight part (10) has a bottom (14), locally of reduced thickness, to allow it to be pierced for the purpose of injecting a gas into the tube through the orifice thus made.

2. Connector according to Claim 1, characterized in that the closed-off end has outer radial ribs (18) intended to form fastening and reaction points for a bottom-piercing appliance (22).

3. Connector according to Claim 2, characterized in that the outer portion of the bottom of the straight part has an annular bearing surface (17) surrounding the portion of small thickness and intended to serve as a support for a gasket.

4. Connector according to any one of the preceding claims, characterized in that the bottom (14) of the straight part has a virtually spherical concave surface (15) towards the inside and a virtually plane central portion (16) towards the outside.

**Patentansprüche**

1. Dampfaustritt-Anschlussstück zur Anordnung zwischen dem Auslass (5) eines Rohres (3) eines röhrenförmigen Stranges eines Dampferzeugers und der Anschlussleitung (8) dieses Rohres an einen Dampfsammler, wobei das Anschlussstück dieser Bauweise einen rohrförmigen geradlinigen Abschnitt (10) aufweist, der durch Verschweissen eines seiner Enden mit dem Auslass des Rohres des Stranges verbunden ist und der an seinem anderen Ende abgeschlossen ist, und ein rohrförmiger Abschnitt (19) seitlich vom geradlinigen Abschnitt abzweigt und an seinem anderen Ende mit der Anschlussleitung (8) zum Dampfsammler verschweisst ist, dadurch gekennzeichnet, dass das abgeschlossene Ende des geradlinigen Abschnittes (10) einen Boden (14) aufweist, der örtlich eine verringerte Dicke hat, um seine Perforation zu gestatten, damit in das Rohr ein Gas durch die auf diese Weise geschaffene Öffnung eingespritzt werden kann.

2. Dampfaustritt-Anschlussstück nach Anspruch 1, dadurch gekennzeichnet, dass das abgeschlossene Ende radiale Aussenrippen (18) aufweist, die dazu dienen, Befestigungs- und Reaktionspunkte für eine Vorrichtung (22) zum Perforieren des Bodens zu bilden.

3. Dampfaustritt-Anschlussstück nach Anspruch 2, dadurch gekennzeichnet, dass der äussere Abschnitt des Bodens des geradlinigen Abschnittes eine ringförmige Anlagefläche (17) aufweist, die den Abschnitt geringer Dicke umgibt und dazu bestimmt ist, als Anlage für eine Dichtung zu dienen.

4. Dampfaustritt-Anschlussstück nach einem der vorausgehenden Ansprüche, dadurch gekennzeichnet, dass der Boden (14) des geraden Abschnittes nach innen zu eine konkave Fläche (15) aufweist, die praktisch kugelförmig ist, und nach aussen hin einen mittigen Abschnitt (16), der praktisch eben ist.

0 133 133

Fig 1

Fig 2

Fig 3

Fig 4